# EUROPÄISCHE PATENTSCHRIFT

(11) **EP 1 087 872 B1**
(45) Veröffentlichungstag und Bekanntmachung des Hinweises auf die Patenterteilung: **13.07.2005**
(21) Anmeldenummer: 99920801.0
(22) Anmeldetag: 27.04.1999
(51) Int. Cl.: B41N 3/00

(54) **WERTDOKUMENT MIT SICHERHEITSELEMENT**
VALUABLE DOCUMENT WITH A SECURITY ELEMENT
DOCUMENT DE SECURITE MUNI D'UN ELEMENT DE SECURITE

(30) Priorität: 30.04.1998 DE 19819571
(43) Veröffentlichungstag der Anmeldung: 04.04.2001
(73) Patentinhaber: Giesecke & Devrient GmbH, 81677 München (DE)
(72) Erfinder: KAULE, Wittich, D-82275 Emmering (DE)
(74) Vertreter: Klunker . Schmitt-Nilson . Hirsch
(86) Internationale Anmeldenummer: PCT/EP1999/002849
(87) Internationale Veröffentlichungsnummer: WO 1999/056964

(56) Entgegenhaltungen:
- EP-A- 0 305 103
- EP-A- 0 330 733
- EP-A- 0 338 612
- EP-A- 0 536 855
- EP-A- 0 613 786
- EP-A- 0 758 587
- WO-A-94/13749
- GB-A- 2 306 689
- US-A- 4 177 728
- US-A- 5 384 007
- US-A- 5 713 287

## Beschreibung

Die Erfindung betrifft em Verfahren zur Herstellung von Sicherheitsfolien für Wertgegenstände, wie Wertpapiere, bestehend aus einer transparenten oder transluzenten Trägerfolie und einer darauf aufgebrachten Abdeckschicht, die in Form von Zeichen oder Mustern vorliegt und/oder beschichtungsfreie Bereiche in Form von Zeichen, Mustern oder dergleichen aufweist, die insbesondere im Durchlicht klar zu erkennen sind.

Sicherheitsfolien in Form von Fäden oder Bändern, die in Wertpapiere, wie Banknoten, Schecks, Identitäts-, Kreditkarten und dergleichen eingebettet werden, sind bekannt. Zur Erhöhung der Sicherheit und als Fälschungsschutz sind derartige Fäden häufig mit einer sogenannten Negativschrift versehen. Diese Schrift wird durch metallfreie Bereiche in einer ansonsten vollflächigen metallischen Beschichtung des die Fäden bildenden, lichtdurchlässigen Trägermaterials gebildet. Hält man ein Wertpapier, das einen derartigen Faden enthält, gegen das Licht, so erscheint der Faden an sich wegen der opaken metallischen Beschichtung dunkel. Die metallfreien Bereiche heben sich vor diesem dunklen Hintergrund hell und kontrastierend ab. Dieser augenfällige Auflicht-/Durchlichteffekt bildet einen sehr guten Schutz gegen Fälschungen. Der Sicherungseffekt der Negativschrift liegt in der aufwendigen und komplizierten Herstellung, die viel Know-how, einen hohen apparativen Aufwand, besondere Druckfarben und eine Vielzahl von Arbeitsgängen erfordert. Eine gewöhnliche gedruckte Information kann im Gegensatz hierzu mit den heutzutage zur Verfügung stehenden Kopier- und Druckgeräten ohne großen Aufwand originalgetreu gefälscht werden.

Darüber hinaus sind auch Sicherheitsfolien bekannt, die Beugungsstrukturen, wie konventionelle Hologramme, Kinegramme, Pixelgramme etc. aufweisen. Der Fälschungsschutz dieser Elemente beruht auf dem betrachtungswinkelabhängigen Farbspiel, das diese Elemente zeigen. Derartige Sicherheitsfolien werden häufig in Form von Streifen oder Etiketten auf der Oberfläche von Wertgegenständen aufgebracht.

Die Massenproduktion der Beugungsstrukturen erfolgt üblicherweise durch Umsetzung der Beugungsstrukturen in eine Reliefstruktur, die anschließend als Prägestempel verwendet wird. Die Prägung erfolgt meist in eine thermoplastische Schicht oder eine während des Prägevorgangs härtbare Lack- oder Harzschicht. Diese Schichten können eventuell vor dem Prägevorgang mit einer dünnen Metallschicht versehen werden, die am fertigen Produkt dafür sorgt, dass die Beugungsstrukturen in Reflexion erkennbar sind. Häufig erfolgt der Metallisierungsvorgang allerdings erst nach dem Prägen, insbesondere wenn in flüssige bis zäh fließende Materialien, wie UVhärtbare Lacke geprägt wird, die erst während des Prägevorgangs durch entsprechende Behandlung, z.B. Bestrahlung mit UV-Licht, gehärtet werden.

Diese Herstellung dieser geprägten Lackschichten kann direkt auf dem zu sichernden Gegenstand erfolgen. Gemäß einer alternativen, sehr gängigen Technologie werden in einem separaten Arbeitsgang Transferfolien hergestellt, die in ihrem Schichtaufbau die geprägte Lackschicht enthalten. Dieser Schichtaufbau wird anschließend auf den Wertgegenstand mittels geeigneter Klebstoffschichten übertragen.

Zur Erhöhung des Fälschungsschutzes wurde auch bereits vorgeschlagen, die Reflexionsschicht einer derartigen Beugungsstruktur mit einer Negativschrift, d.h. mit Aussparungen in Form von Zeichen, Mustern oder dergleichen zu versehen (EP 0 330 733 A1). In der EP 0 330 733 A1 werden auch verschiedene Verfahren zur Erzeugung derartiger Aussparungen angegeben. Neben den konventionellen Ätzverfahren wird auch auf ein Herstellverfahren verwiesen, bei dem auf die metallbeschichtete Seite der Folie eine Druckfarbe aufgedruckt wird, die thermoplastische Eigenschaften besitzt und bei höheren Temperaturen erweicht und klebrig wird. Kaschiert man eine so vorbehandelte Folie unter Anwendung von Wärme und Druck gegen eine zweite unbehandelte Folienbahn, so haften die beiden Folien im Bereich der aufgedruckten Schriftzeichen oder Muster aneinander. Beim Trennen der beiden Folien werden dann aus der Metallbeschichtung die den Zeichen oder Mustern entsprechenden Bereiche herausgelöst.

Zur Herstellung von Verpackungsmaterial ist es aus der DE-OS 3610 379 bekannt, auf die Folien zunächst ein Druckbild aufzudrucken, wie es später in der Metallbeschichtung als Negativbild erscheinen soll und erst in einem zweiten Verfahrenschritt die Metallbeschichtung aufzubringen. Der Aufdruck kann im Tiefdruck oder Flexodruck erfolgen. Für die Aufbringung des Druckbildes werden dabei Druckfarben oder Lacke verwendet, die zur Metallbeschichtung eine geringe Haftung aufweisen. Die Metallbeschichtung wird dann mechanisch durch Einwirkung eines Luft- oder Flüssigkeitsstrahls oder auch über eine mechanische Schabeinrichtung entfernt.

Ein Verfahren zur Herstellung teilmetallisierter Gitterstrukturen ist in der EP 0 758 587 A1 beschrieben. Dabei wird ein Druckbild mit einem Ätzmittel für das reflektive Material auf die Reflexionsschicht so aufgedruckt, dass die Reflexionsschicht partiell entfernt und die Oberfläche der die Reliefstrukturen aufweisenden Lackschicht wieder freigelegt wird.

Aus der EP 0 536 855 A2 ist ein Sicherheitsfaden für Sicherheitspapier bekannt, bei welchem durch Aufdruck eines die Metalloberfläche schützenden Resistlackes und anschließender Entfernung der nicht geschützten Bereiche mit einem Ätzmittel Aussparungen in der Metalloberfläche erzeugt werden.

Die WO 94/13749 A1 beschreibt eine Klebstoffzusammensetzung, die zur Befestigung von semitransparenten dielektrischen Materialien auf einem Substrat zur Herstellung von Dünnschichtsicherheitselementen dient. Die Klebstoffzusammensetzung wird dazu auf das Substrat mittels Offsettiefdruck in Patches aufgedruckt, an denen das dielektrische Material haften bleibt und so vom Träger getrennt werden kann.

All diesen bekannten Verfahren ist gemeinsam, dass in einem bestimmten Arbeitsgang die Information, die später in Form von Aussparungen vorliegen soll, entweder mit schlecht haftenden oder ätzenden Druckfarben aufgedruckt werden muss. Für diesen Druckvorgang müssen separate Druckformen hergestellt werden. Die Herstellung der Druckformen ist allerdings sehr aufwendig. Für einen Tiefdruckzylinder beispielsweise muss ein metallischer Zylinder sehr aufwendig vorbereitet, d.h. verkupfert, geschliffen, mit der zu druckenden Information versehen und schließlich noch verchromt werden. Der Druckzylinder kann zudem nur für den jeweiligen Druckauftrag verwendet werden. Insbesondere bei Massenartikeln, wie Hologrammen, können daher Negativschriftzeichen nur vorgesehen werden, wenn eine entsprechend hohe Anzahl von Hologrammen hergestellt wird, so dass sich die zusätzlichen Kosten auf möglichst viele Endprodukte verteilen. Für kleine Auflagen oder Produktionen, die mit unterschiedlichen Negativschriftzeichen versehen werden sollen, sind die Produktionskosten bisher zu hoch.

Dementsprechend liegt der Erfindung die Aufgabe zugrunde, ein Verfahren zur Herstellung von Sicherheitselementen mit Negativschrift vorzuschlagen, das auch bei kleinen Auflagen oder variierenden Informationen eine kostengünstige Produktion ermöglicht.

Die Lösung dieser Aufgabe ergibt sich aus den unabhängigen Ansprüchen. Weiterbildungen sind Gegenstand der Unteransprüche.

Der Erfindung liegt die Erkenntrus zugrunde, dass im Rahmen der Herstellung der Negativschriftzeichen einfache und flexible, auf modernster Digitaltechnik beruhende Druckverfahren verwendet werden können, die im direkten Wertpapierdruck nicht einsetzbar sind. Denn diese Druckverfahren sind allgemein zugänglich und häufig auch ohne großen apparativen Aufwand einsetzbar, so dass mit diesen Druckverfahren hergestellte Informationen ebenso einfach und originalgetreu reproduziert bzw. gefälscht werden können. Aus diesem Grund werden im Wertpapierdruck nach wie vor komplizierte und aufwendige Techniken, wie der Stichtiefdruck verwendet, die mit üblichen, in der Computertechnik verwendeten Druckverfahren nicht imitiert werden können.

Bei der Negativschrift dagegen wird der Sicherungseffekt nicht durch das verwendete Druckverfahren bestimmt, sondern durch die Vielzahl von Arbeitsschritten und deren Zusammenwirken. Bei den meisten Verfahren zur Herstellung der Negativschrift tritt das direkte Druckergebnis am Endprodukt nicht mehr in Erscheinung. Wird die Negativschrift beispielsweise mittels Lösungsmitteln erzeugt, so wird der bereichsweise unter der vollflächigen, opaken, vorzugsweise metallischen Schicht angeordnete Aufdruck, sowie die direkt darüber angeordnete opake Schicht durch die Einwirkung des Lösungsmittels entfernt. Da dieser Herstellungsprozess zudem in gesicherter Umgebung erfolgt, ist es nicht notwendig, für den Aufdruck ein kompliziertes und möglichst fälschungssicheres Druckverfahren, wie beispielsweise das Stichdruckverfahren zu verwenden.

Gemäß der Erfindung werden daher im Rahmen der Herstellung von Negativschriftzeichen Druckverfahren eingesetzt, die eine einfache und schnelle Änderung der zu druckenden Information ermöglichen, unabhängig von der Tatsache, dass das Druckergebnis unter Umständen leicht zu fälschen ist.

Nach dem erfindungsgemäßen Verfahren wird die bereits in der Druckmaschine befestigte Druckform, beispielsweise ein Druckzylinder bebildert. Die Bebilderung der Druckform erfolgt dabei computergesteuert mittels digitaler Daten. Dies hat den Vorteil, dass die zu druckende Information zuvor am Bildschirm zusammengesetzt und bearbeitet werden kann. Vorzugsweise ist die Bebilderung der Druckform in der Druckmaschine reversibel, d.h. eine neue Bebilderung der Druckform kann sehr schnell, wenn nötig zwischen zwei Druckvorgängen erfolgen. Auf diese Weise können die zu druckenden Informationen schnell und einfach variiert werden, ohne dass die Kontinuität des Herstellungsprozesses unterbrochen werden muss.

Gemäß einer bevorzugten Ausführungsform wird als Druckform eine Tiefdruckform verwendet, die mit einer vollflächigen Rastergravur versehen ist. Für die Bebilderung in der Druckmaschine wird das gesamte Raster mit einem leicht härtbaren Lack gefüllt und gehärtet. Anschließend wird der Lack aus den Rasterpunkten, die später farbannehmend sein sollen, mittels Laserstrahlung, Funkenerosion oder anderen geeigneten Maßnahmen, die in der Druckmaschine installiert sind, wieder entfernt. Dabei kann der Fülllack vollständig oder auch nur zum Teil entfernt werden, je nachdem, wieviel Farbe übertragen werden soll. Nach jedem Abdruck der Druckform kann das Raster wieder aufgefüllt und neu bebildert werden.

Bei einer weiteren Ausführungsform wird eine Siebdruckform, die mit einer vollflächigen Siebstruktur versehen ist, verwendet. In der Druckmaschine wird die Siebstruktur mit einem lichthärtbaren Lack gefüllt. Die Bebilderung erfolgt anschließend ebenfalls in der Druckmaschine, indem der Lack aus den Sieblöchern, die später farbgebend sein sollen, mit Laserstrahlung oder anderen geeigneten Maßnahmen wieder entfernt wird. Nach jedem Druckvorgang können die Sieblöcher wieder verschlossen und neu bebildert werden.

Gemäß einer weiteren Ausführungsform kann als Druckform eine Offsetdruckform verwendet werden, die durch Einwirkung eines Laserstrahls oder durch Funkenerosion in den Bereichen, die farbannehmend sein sollen, in der Druckmaschine belichtet wird.

Alternativ kann die Bebilderung der Druckform auch einfach über elektrofotografische Verfahren erfolgen, ähnlich einem Laserdrucker.

Die oben genannten Verfahren fallen unter die drucktechnischen Begriffe "Direct Imaging", "Digital Printing", "Direct to Press" oder "Direct to Print". Druckverfahren, die nach dem Prinzip des Laserdruckers arbeiten, werden beispielsweise häufig unter dem Begriff "Digital Printing" zusammengefasst.

Die unter diesen Begriffen bekannten und nicht explizit erwähnten Verfahren können im Rahmen der Erfindung ebenfalls eingesetzt werden, sofern eine schnelle und einfache Veränderung der zu druckenden Information gewährleistet ist.

Mit der so bebilderten, vorzugsweise zylindrischen Druckform wird gemäß einer Ausführungsform des erfindungsgemäßen Verfahrens anschließend eine Trägerfolie in Form der späteren Zeichen oder Muster bedruckt. Anschließend wird die gesamte bedruckte Trägerfolie mit einer dünnen Abdeckschicht versehen. Zur Erzeugung der beschichtungsfreien Bereiche wird schließlich der Farbauftrag und die darüber liegende Abdeckschicht entfernt.

Gemäß einer bevorzugten Ausführungsform liegt die Trägerfolie in Form eines endlosen Bandes vor, so dass das Verfahren kontinuierlich durchgeführt werden kann. Der Begriff "Trägerfolie" steht hierbei für alle Arten von Trägermaterialien, wie Kunststoffe, Metalle oder Papiere jeglicher Zusammensetzung.

Bei der Abdeckschicht handelt es sich vorzugsweise um eine Metallschicht, die im Vakuumdampfverfahren auf die Trägerfolie aufgebracht wird. Es können jedoch auch beliebige andere Abdeckschichten, wie Farbschichten, Interferenzschichten, dichroitische Schichten, teildurchlässige dielektrische Schichten oder teildurchlässige metallische Schichten oder dergleichen verwendet werden. Bei den Farbschichten kann es sich um beliebige Druckfarben oder besondere Merkmalstoffe enthaltende Schichten handeln. Als Merkmalstoffe können magnetische, lumineszierende, thermochrome, irisierende und/oder andere, einen besonderen physikalischen und/oder chemischen Effekt aufweisende Stoffe eingesetzt werden.

Das Entfernen der Abdeckschicht erfolgt vorzugsweise mit einem flüssigen Lösungsmittel. Dabei können die bekannten Lösungsmittel Wasser, Alkohole, wässrige Lösungen, Säuren oder Laugen verwendet werden.

Gemäß einem weiteren Aspekt der Erfindung können jedoch auch starke organische Lösungsmittel, wie Benzin, Benzol, Xylol, Terpentin, Tetrachlorkohlenstoff, Methylanchlond oder dergleichen eingesetzt werden. Sie werden vorzugsweise in geschlossenen Kreisläufen geführt, um Umweltbelastungen zu vermeiden.

Die organischen Lösungsmittel besitzen den Vorteil, dass mit ihnen auch Druckfarben und Lacke gelöst werden können, die mit Druckverfahren, wie beispielsweise dem Offsetdruck, verdruckbar sind, die es erlauben, Schrifthöhen bis zu 0,1 mm zu erzeugen. Mit den üblichen für die Herstellung von Negativschriftzeichen verwendeten Druckverfahren, wie dem Tiefdruckverfahren waren lediglich Schrifthöhen oberhalb von 0,2 mm möglich. Somit können im Rahmen der Erfindung erstmals feinste Linien und kleine Schriftgrößen als Negativschriftzeichen erzeugt werden.

Die Verwendung organischer Lösungsmittel ist jedoch nicht auf die im Rahmen der Erfindung erläuterten Verfahren zur Herstellung von Negativschriftzeichen beschränkt. Sie können auch im Zusammenhang mit den bereits bekannten Herstellverfahren vorteilhaft eingesetzt werden. Im Zusammenhang mit den erfindungsgemäßen Druckverfahren werden die organischen Lösungsmittel allerdings vorzugsweise in den Fällen angewandt, in welchen die erfindungsgemäß bebilderbaren Druckformen den Offsetverfahren oder elektrofotografischen Verfahren zugeordnet werden können, währen die bekannten Lösungsmittel, wie Wasser, Säuren, Laugen etc. vorzugsweise angewandt werden, wenn die direkt bebilderte Druckform dem Tiefdruck- oder Siebdruckverfahren zugeordnet werden kann.

Der Auswaschvorgang kann eventuell durch mechanische Mittel, wie eine rotierende Walze oder Bürste unterstützt werden. Auch eine zusätzliche Einwirkung von Ultraschall ist möglich.

Die auf diese Weise hergestellte Sicherheitsfolie kann schließlich in einem letzten Schritt in Fäden oder Bänder geschnitten werden. Sollen diese Fäden oder Bänder als Sicherheitsfäden für Wertpapiere eingesetzt werden, so sollte ihre Breite höchstens 5 mm betragen.

Alternativ kann die Sicherheitsfolie auch als Etikett oder Transferfolie ausgestaltet werden. Für den Fall der Transferfolie wird die Trägerfolie vor dem Bedrucken mit dem Negativbild vorzugsweise mit einer Trennschicht versehen, die für ein leichtes Ablösen der Trägerfolie vom übrigen Schichtaufbau nach dem Übertrag auf den endgültigen Gegenstand sorgt. Anschließend wird die Trägerfolie nach dem erfindungsgemäßen Verfahren bearbeitet und schließlich in einem letzten Schritt mit einer Klebstoffschicht versehen. Dabei kann es sich um einen Heißschmelzkleber oder auch um einen strahlungshärtbaren Klebstoff handeln.

Gemäß einer weiteren bevorzugten Ausführungsform kann die Trägerfolie vor dem Aufdrucken des Negativbildes mit einer Lackschicht versehen werden, in welche eine Reliefstruktur, vorzugsweise in Form einer Beugungsstruktur, eingeprägt wird.

Gemäß einer weiteren Ausführungsform kann die Trägerfolie auch das Wertobjekt selbst sein, wie eine Registriermarke, ein Siegel, ein Wertdokument oder ein sonstiger Gegenstand, oder sie kann einen Teil des Wertobjekts bilden, beispielsweise wenn eine einschichtige Ausweiskarte nur partiell mit einer Abdeckschicht versehen werden soll. Besteht dieAusweiskarte aus mehreren Schichten, so kann z. B. eine der Schichten mit einer ästhetisch ansprechenden Abdeckschicht, wie z.B. einer Aluminium- oder Goldschicht versehen werden, in der Aussparungen vorhanden sind, die eine Information darstellen und/ oder die so dimensioruert werden, dass sie die Sicht auf darunter liegende Informationen oder Muster freigeben.

Die Negativzeichen können jedoch im Rahmen der Erfindung auch durch Ätztechniken erzeugt werden. Hierfür wird die Trägerfolie zuerst mit der Abdeckschicht versehen und anschließend in einer gemäß der Erfindung bebilderten Druckmaschine mit einer ätzenden Druckfarbe bedruckt, die die Abdeckschicht auflöst. Alternativ kann in der Druckmaschine auch ein Schutzlack aufgedruckt werden, der bei einem anschließenden Ätzprozess dafür sorgt, dass die Abdeckschicht in diesen Bereichen nicht entfernt wird. Dieses Verfahren eignet sich insbesondere für die Herstellung von Positivzeichen, d.h. Zeichen oder Mustern, die durch die Abdeckschicht selbst dargestellt werden. Derartige Zeichen können selbstverständlich auch mit den bereits erläuterten Verfahren erzeugt werden. In diesem Fall muss die gesamte Folie ausgenommen der gewünschten Zeichen mit ätzender Druckfarbe bzw. einer löslichen Druckfarbe bedruckt werden. Der Ausdruck "Zeichen" steht hierbei, wie auch in Zusammenhang mit allen anderen Ausführungsformen, für Buchstaben, Ziffern, Muster oder dergleichen sowie für Kombinationen davon.

Negativ- und/oder Positivzeichen lassen sich gemäß einer weiteren Variante der Erfindung auch dadurch herstellen, dass in einem ersten Schritt in einer gemäß der Erfindung bebilderten Druckmaschine ein Klebstoff auf die Trägerfolie aufgebracht wird und anschließend die Abdeckschicht nur in diesen mit Klebstoff beschichteten Bereichen angeordnet wird. Hierfür wird die Abdeckschicht vorzugsweise auf einer Transferfolie vorbereitet und mit der klebstoffbeschichteten Trägerfolie in Kontakt gebracht. Handelt es sich bei der Klebstoffschicht um einen Heißschmelzkleber, so muss gleichzeitig Wärme zugeführt werden, um den Klebstoff klebfähig zu machen. Beim anschließenden Abziehen der Transferfolie bleibt die Abdeckschicht im Bereich des aktivierten Klebstoffs auf der Trägerfolie haften. Diese Vorgehensweise eignet sich vorzugsweise für Abdeckschichten, die Merkmalstoffe enthalten und die als Positivschnft ausgeführt sind, da diese Schichten aufgrund der Größe der Pigmente der Merkmalstoffe häufig nur sehr schlecht oder überhaupt nicht zu verdrucken sind.

Die erfindungsgemäßen Verfahren haben den Vorteil, dass durch die einfache Bebilderung der bereits in der Druckmaschine befestigten Druckform die Produktionskosten niedrig gehalten werden können. Aufwendige zusätzliche Prozesse, wie Ätzen oder Galvanisieren von Druckformzwischenprodukten entfallen völlig. Dadurch können auch Aufträge mit kleinen Mengen kostengünstig durchgeführt werden. Sofern die Bebilderung der Druckform wieder gelöscht und durch eine neue Bebilderung ersetzt werden kann, lassen sich sogar innerhalb einer laufenden Auftragsbearbeitung unterschiedliche Informationen in Form eines Negativ- und/oder Positivbildes erzeugen. Dies bietet die Möglichkeit, individualisierte Informationen zu erzeugen. Wird die nach dem erfindungsgemäßen Verfahren hergestellte Sicherheitsfolie beispielsweise zur Absicherung von Ausweisen, Pässen oder anderen benutzerbezogenen Dokumenten verwendet, so können auf diese Weise Sicherheitselemente, wie Hologramme oder Kinegramme etc. hergestellt werden, deren Metallisierung Aussparungen in Form besonderer benutzerbezogener

Daten, wie einer Kontonummer, dem Namen etc. aufweisen oder deren Metallisierung lediglich in Form bestimmter benutzerbezogener Daten vorhanden ist, so dass der optisch variable Effekt nur im Bereich der individualisierten Information auftritt.

Durch die direkte Bebilderung der Druckform in der Druckmaschine werden daruber hinaus Registerschwierigkeiten umgangen. Denn wird die Druckform außerhalb der Druckmaschine bebildert, treten beim Einbau Verzüge auf. Der Vorteil der Verzugsfreiheit ist besonders wichtig, wenn der erfindungsgemäß erzeugte Druck im Register zu bereits auf der Folie befindlichen Informationen, z.B. Beugungsstrukturen zu drucken ist.

Die mit den erfindungsgemäßen Verfahren erzeugten Informationen können auch so mit weiteren Schichten kombiniert werden, dass sie visuell nicht in Erscheinung treten. Enthält die erfindungsgemäß partiell aufgebrachte Abdeckschicht beispielsweise einen Merkmalsstoff, so können die abdeckschichtfreien Zwischenbereiche mit einer Schicht bedruckt werden, die zwar visuell das gleiche Erscheinungsbild wie die Abdeckschicht aufweist, aber keinen Merkmalstoff enthält. Erst durch die maschinelle Detektion des Merkmalstoffs wird die Information erkennbar.

Die Tarnschicht kann jedoch auch als vollflächige Schicht ausgebildet sein, die über und/ oder unter der Abdeckschicht angeordnet ist. Sie ist in jedem Einzelfall auf die Abdeckschicht und die damit dargestellte Information abzustimmen.

Weitere Ausfuhrungsbeispiele sowie Vorteile werden anhand der Fig. erläutert.

Es zeigen:
- Fig. 1: schematische Darstellung einer Vorrichtung, mit der das erfindungsgemäße Verfahren durchgeführt werden kann sowie Darstellung der einzelnen Bearbeitungsschritte an einer Trägerfolie,
- Fig. 2: Darstellung der Bearbeitungsschritte zur Bebilderung einer Tiefdruckplatte,
- Fig. 3: Computer-to-Press-Siebdruckwerk zur Durchführung des erfindungsgemäßen Verfahrens,
- Fig. 4: erfindungsgemäße Trägerfolie in Aufsicht.

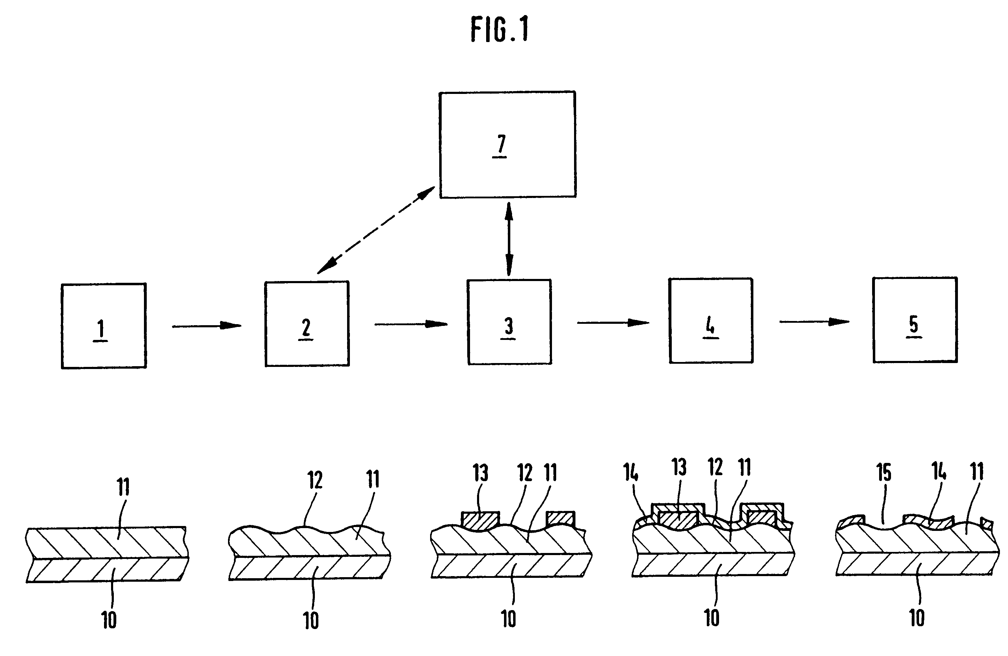

Fig. 1 zeigt schematisch die einzelnen Bearbeitungsstationen für die Herstellung einer Hologrammfolie mit Negativschrift. Es werden lediglich die wesentlichen Bearbeitungsstationen dargestellt. Je nach herzustellendem Produkt können mehr oder weniger Vorrichtungen bzw. Verfahrensschritte notwendig sein. Unter den jeweiligen Bearbeitungsstationen ist der Schichtaufbau der Trägerschicht nach Durchlaufen der jeweiligen Bearbeitungsstation dargestellt. In der Bearbeitungsstation 1 wird eine vorzugsweise transluzente oder transparente Trägerfolie 10 mit einer Lackschicht 11 beschichtet. Bei der Station 2 handelt es sich um eine Prägestation, in welcher die Lackschicht 11 mit einer Reliefstruktur 12 in Form einer Beugungsstruktur versehen wird. In der nachfolgenden Druckstation 3 wird die geprägte Oberfläche der Lackschicht 11 mit einem Druckbild 13 versehen, welches dem späteren Negativbild entspricht. In der darauf folgenden Station 4 wird der Schichtaufbau mit einer Abdeckschicht, vorzugsweise einer Metallschicht 14 versehen. Üblicherweise wird die Metallschicht im Vakuumdampfverfahren aufgebracht, so dass es sich bei der Station 4 üblicherweise um eine Vakuumdampfanlage handelt. In der nachfolgenden Station 5 wird nun die in der Druckstation 3 aufgebrachte Druckfarbe 13 und die über der Druckfarbe 13 liegende Abdeckschicht 14 entfernt. Meist erfolgt dies mit Hilfe von Lösungsmitteln, wie Wasser, Xylol oder ähnlichem. Der Waschvorgang kann durch Bürsten oder Ultraschall unterstützt werden. Nach dem Waschvorgang weist die Metallschicht 14 Aussparungen 15 in Form des gewünschten Negativbildes auf.

Das in der Druckstation 3 auf die Trägerfolie übertragene Druckbild wird mit Hilfe elektronischer Datenverarbeitung 7 erzeugt. Dabei kann das gewünschte Muster von einer Bedienungsperson am Bildschirm erzeugt oder auch über Scanner in die Datenverarbeitungsanlage 7 eingebracht werden. Unter Umständen ist eine weitere Bearbeitung der gespeicherten Informationen notwendig. Anschließend wird die Information direkt an die in der Druckstation 3 befestigte Druckform oder eine entsprechende Bebilderungsvorrichtung für die Druckform weitergegeben. Je nach verwendetem Drucksystem werden die ubermittelten Steuerungsdaten für die Bebilderung der jeweiligen Druckform verwendet.

Die Datenverarbeitungsanlage kann zusätzlich auch als Steuerung zwischen der Prägestation 2 und der Druckstation 3 dienen um den Aufdruck 13 platziert zur geprägten Information 12 aufbringen zu können.

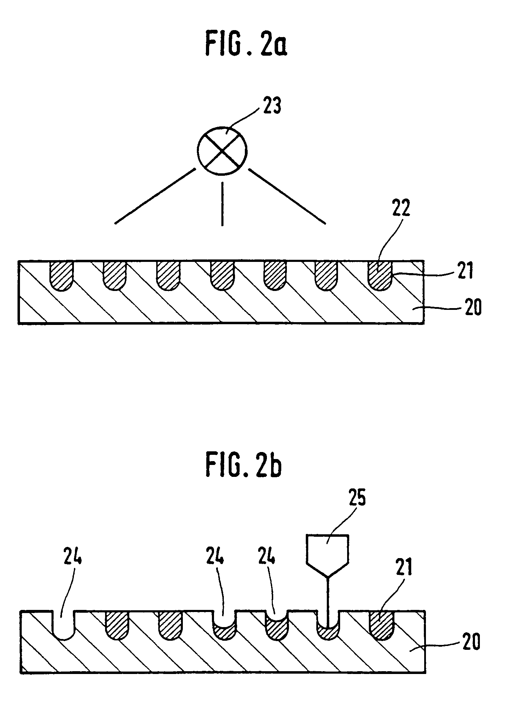

Bei der Druckstation 3 kann es sich beispielsweise um ein Tiefdruckwerk mit einer Tiefdruckplatte bzw. einem Tiefdruckzylinder handeln. Fig. 2 zeigt schematisch die einzelnen Bearbeitungsschritte zur Bebilderung einer Tiefdruckplatte 20 gemäß der Erfindung. Die Tiefdruckplatte 20 weist vorzugsweise eine vollflächige Rastergravur 21 auf, die mit einem leicht härtbaren Lack 22, wie einem UV-härtbaren Lack gefüllt und anschließend gehärtet wird. Dies kann beispielsweise mittels einer UV-Lampe 23 erfolgen, wie in Fig. 2a dargestellt. Die Tiefe der Rasterpunkte entspricht dabei der maximal zu übertragenden Druckfarbe. Die farbannehmenden Rasterpunkte 24, die den späteren Aufdruck 13 erzeugen, werden für die Bebilderung anschließend wieder freigelegt, wobei über die Menge des abgetragenen Lackmaterials 22 die Tiefe der Näpfchen und damit die zu übertragende Farbmenge eingestellt werden kann. Das gezielte Abtragen kann beispielsweise mittels eines Lasers 25 erfolgen, wie in Fig. 2b gezeigt. Die freigelegten Rasterpunkte können nun wie bei einer gewöhnlichen Tiefdruckplatte mit Druckfarbe gefüllt werden, während die mit gehärtetem Lack gefüllten Rasterpunkte keine Farbe aufnehmen. Dieses System hat den Vorteil, dass es reversibel ist, d.h. die zu druckende Information ist löschbar und damit veränderbar, da die Rasterung immer wieder gefüllt und neu bebildert werden kann. Auf diese Weise kann der Druckzylinder zwischen zwei Druckvorgängen mit einer neuen zu druckenden Information versehen werden.

Alternativ können jedoch auch elektrofotografische Methoden verwendet werden. In diesem Fall wird die Druckwalze entsprechend der zu druckenden Information elektrostatrsch aufgeladen, so dass nur in den zu druckenden Bereichen Toner angelagert wird.

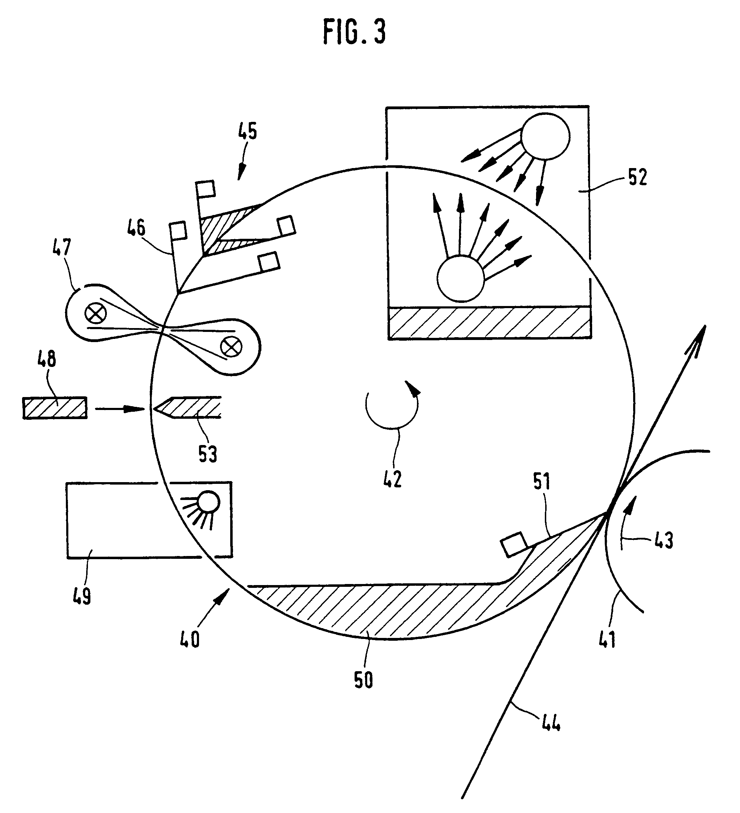

Fig. 3 zeigt schematisch die einzelnen Bearbeitungsschritte zur Bebilderung eines Computer-to-Press-Siebdruckwerkes. Das zylindrische Rundsieb 40 sowie der Gegendruckzylinder 41 drehen sich dabei in Richtung der Pfeile 42,43. Dazwischen bewegt sich mit gleicher Umlaufflächengeschwindigkeit die Druckbahn 44. Die übrigen dargestellten Vorrichtungen sind ortsfest montiert. Die Bebilderung des Siebdruckrohzylinders 40 beginnt in der Station 45, in welcher ein Lack zugeführt wird, der die Sieblöcher verschließt.

Vorzugsweise handelt es sich bei dieser Vorrichtung 45 um ein UV-Lackrakel. Das Nach-Rakel 46 säubert das Sieb von überschüssigen Lackresten. Anschließend wird der aufgebrachte Lack in der Vorrichtung 47 gehärtet. Im vorliegenden Fall umfasst die Vorrichtung 47 ein UV-Lampenaggregat, das aus zwei UV-Lampen besteht, wobei jeweils eine der Lampen innerhalb und eine außerhalb des Siebdruckzylinders angeordnet ist. Anschließend werden in der Station 48 gezielt einzelne Sieblöcher in Form der zu druckenden Information computergesteuert erneut geöffnet. Dies kann beispielsweise mittels eines Lasers, einer Luftdüsenvorrichtung oder einer sonstigen Vorrichtung geschehen. Werden die Sieblöcher mit einem Laser geöffnet, kann es sinnvoll sein, im Inneren des Siebs eine Düse 53 anzuordnen, die gleichzeitig das gelöste Material entfernt. In der Station 49 wird das Sieb von Lackteilchen befreit, die beim Öffnen der einzelnen Löcher in der Station 48 am Sieb hängen geblieben sind. Diese Reinigung erfolgt vorzugsweise mit Hilfe von Sprühdüsen. Damit ist der Bebilderungsvorgang des Siebdruckzylinders abgeschlossen. Dreht sich der so bebilderte Siebdruckzylinder 40 unter der im Inneren des Siebdruckzylinders angeordneten Druckfarbe 50 weg, so wird im Bereich des Rakels 51 nur im Bereich der nach oben beschriebenem Verfahren geöffneten Sieblöcher Farbe auf den Bedruckstoff 44 übertragen. Nach erfolgtem Druckvorgang wird das Sieb schließlich in einer weiteren Reinigungsstation 52 von Druckfarbresten befreit. Anschließend kann der Zyklus von neuem beginnen, wenn ein anderes Druckbild auf den Bedruckstoff 44 übertragen werden soll.

Statt eines UV-Lacks können auch thermoplastische Materialien verwendet werden, die ebenfalls UV-härtbar sind. Aber auch lösungsmittelhaltige Thermoplaste sind einsetzbar. In diesem Fall müssen die UV-Lampen durch eine entsprechende Trockenstation, die beispielsweise IR-Strahler aufweist, ersetzt werden. Die thermoplastischen Materialien besitzen auch den Vorteil, dass sie vor der Trocknung bereits aus den einzelnen Sieböffnungen wieder entfernt werden können. Das heißt, die Station 48, 53 wird vor der Trocknerstation 47 angeordnet.

Diese Anordnung steht beispielhaft für Computer-to-Press-Siebdruckwerke. Dieselben Funktionen sind auch im Flachsiebdruck realisierbar. Bei einem Flachsieb ergibt sich die Möglichkeit, die einzelnen Stationen ein- oder wegschwenkbar zu machen. Alternativ ist es möglich, das Sieb nacheinander in die verschiedenen Stationen einzuführen, die in der Druckmaschine integriert sind und erst zum Schluss des Zyklus in die Druckposition zu bringen.

Auch kommen andere Farbzuführungen, wie z.B. ein Kammerrakel, andere Bebilderungsmöglichkeiten, wie z.B. die Funkenerosion in Frage. Wichtig ist erfindungsgemäß lediglich, dass bei einem Siebdruckwerk die Bebilderung durch Verschließen und Freimachen der Löcher innerhalb der Druckmaschine erfolgt.

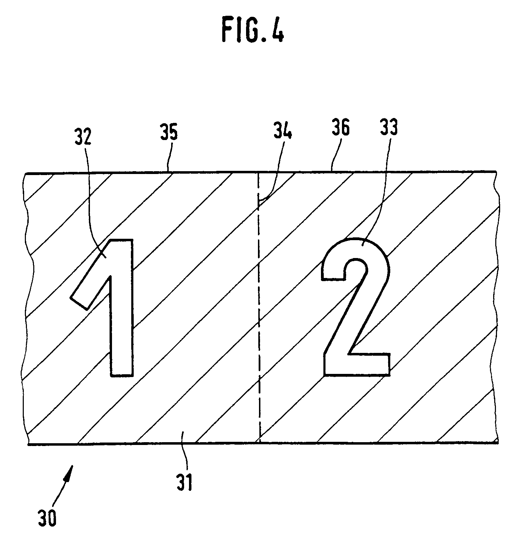

Fig. 4 zeigt eine nach dem erfindungsgemäßen Verfahren hergestellte Endlosfolie 30 in Aufsicht. Die opake Beschichtung 31, vorzugsweise eine Metallschicht, weist Aussparungen in Form von Informationen 32, 33 auf. Diese Informationen variieren entlang der Endlosfolie. Das Wesentliche dabei ist, dass die Informationen nicht nur innerhalb der Fläche variieren, die der Druckfläche der Druckplatte bzw. dem Umfang des Druckzylinders entspricht, sondern auch darüber hinaus. Das heißt, die Wiederholungsrate der Information ist größer als die durch die Druckform vorgegebene bedruckbare Fläche. Eine derartige Folie kann nur mit Hilfe eines der erfindungsgemäßen Verfahren hergestellt werden, da nur sie eine schnelle und kostengünstige Variation der zu druckenden Information während des kontinuierlichen Herstellungsprozesses der Endlosfolie erlauben.

Die in Fig. 4 gezeigten Informationen 32, 33 gehören zu verschiedenen Sicherheitselementen 35, 36, die später jeweils mit einem zu sichernden Gegenstand verbunden werden. In Fig. 4 ist dies durch die gestrichelte Linie 34 angedeutet. Handelt es sich bei der Sicherheitsfolie 30 beispielsweise um eine Transferfolie und bei dem zu sichernden Gegenstand um Banknotenpapier, welches ebenfalls in Endlosform vorliegt, so wird beim Transfervorgang jeder Banknotennutzen mit einem Sicherheitselement versehen. Bei Verwendung der erfindungsgemäßen Sicherheitsfolie 30 wird somit jeder Banknotennutzen mit einem individualisierten Sicherheitselement versehen.

Besonders vorteilhaft lässt sich das erfindungsgemäße Verfahren auch im Zusammenhang mit der Herstellung von Pässen und Ausweiskarten einsetzen. Die Informationen 32,33 können hier beispielsweise Teile von benutzerbezogenen Daten, wie der Kontonummer, dem Namen etc. darstellen oder zumindest mit diesen Daten in Beziehung stehen.

Im gezeigten Fall weist die Abdeckschicht 31 lediglich Aussparungen 32 in Form von Zeichen auf. Die Abdeckschicht kann jedoch umgekehrt auch nur in den zeichen- oder musterförmigen Bereichen vorhanden sein. Auch Kombinationen aus Positiv- und Negativbildern sind möglich.

Die nach einem der erfindungsgemäßen Verfahren hergestellte Folie kann als Transferfolie ausgebildet sein oder auch in Sicherheitselemente beliebiger Form geschnitten werden, die anschließend an einem zu sichernden Gegenstand befestigt werden. Dabei kann es sich um Wertdokumente, wie Banknoten, Ausweiskarten, Pässe, Schecks oder dergleichen handeln, aber auch um andere zu sichernde Produkte, wie Bücher, CDs etc.

## Patentansprüche

1. Verfahren zur Herstellung einer Sicherheitsfolie, die zumindest eine Abdeckschicht (14) aufweist, die in Form von Zeichen vorliegt und/oder beschichtungsfreie Bereiche in Form von Zeichen aufweist, wobei das Verfahren die folgenden Schritte umfasst:
a) Bereitstellen einer Trägerfolie (10),
b) Bebilderung wenigstens einer in einer Druckmaschine befestigten Druckform, so dass Bereiche der Druckform farbannehmend sind, wobei die Bebilderung der Druckform wieder gelöscht und durch eine neue Bebilderung ersetzt werden kann,
c) Einfärben der Druckform,
d) Bedrucken der Trägerfolie, so dass ein Farbauftrag (13) entsteht,
e) Bilden einer dünnen Abdeckschicht (14) auf der bedruckten Trägerfolie (10),
f) Entfernen des Farbauftrags (13) und der darüber liegenden Abdeckschicht, so dass die beschichtungsfreien Bereiche (15) entstehen.

2. Verfahren nach Anspruch 1, **dadurch gekennzeichnet, dass** die Bebilderung der Druckform computergesteuert mittels digitaler Daten erfolgt.

3. Verfahren nach Anspruch 1 oder 2, **dadurch gekennzeichnet, dass** für die Druckform eine Tiefdruckform (20) mit einer vollflächigen Rastergravur (21) verwendet wird, die gemäß folgenden Schritten bebildert wird:
- das Raster wird mit einem leicht härtbaren Lack (22) gefüllt,
- aus den Rasterpunkten (24), die farbannehmend sein sollen, wird der Lack (22) mittels Funkenerosion oder Lichtstrahlung wieder entfernt.

4. Verfahren nach Anspruch 1 oder 2, **dadurch gekennzeichnet, dass** für die Druckform eine Offsetdruckform verwendet wird, die durch Funkenerosion oder Lichtstrahlung in den Bereichen, die farbannehmend sein sollen, belichtet wird.

5. Verfahren nach Anspruch 1 oder 2, **dadurch gekennzeichnet, dass** für die Druckform eine Siebdruckform verwendet wird, die gemäß folgenden Schritten in der Druckmaschine bebildert wird:
- die Sieböffnungen werden vollflächig mit einem leicht härtbaren Lack verschlossen,
- die Sieböffnungen, die farbdurchlässig sein sollen, werden mittels eines computergesteuerten Werkzeugs erneut geöffnet.

6. Verfahren nach Anspruch 5, **dadurch gekennzeichnet, dass** das Sieb mit einem UV-härtbaren Lack verschlossen wird.

7. Verfahren nach Anspruch 5 oder 6, **dadurch gekennzeichnet, dass** die Sieböffnungen durch Licht-, Wärme-, Luft-, Gas-, Flüssigkeitsstrahleinwirkung oder durch Funkenerosion geöffnet werden.

8. Verfahren nach Anspruch 1 oder 2, **dadurch gekennzeichnet, dass** die Bebilderung der Druckform elektrofotografisch erfolgt.

9. Verfahren nach wenigstens einem der Ansprüche 1 bis 8, **dadurch gekennzeichnet, dass** die Druckform als Zylinder ausgebildet ist.

10. Verfahren nach wenigstens einem der Ansprüche 1 bis 9, **dadurch gekennzeichnet, dass** die Trägerfolie (10) in Form eines endlosen Bandes bereitgestellt wird und das Verfahren kontinuierlich durchgeführt wird.

11. Verfahren nach wenigstens einem der Ansprüche 1 bis 10, **dadurch gekennzeichnet, dass** die Trägerfolie (10) nach Schritt a) mit einer Lackschicht (11) versehen wird, in welche eine Reliefstruktur (12), vorzugsweise in Form einer Beugungsstruktur, eingeprägt wird.

12. Verfahren nach wenigstens einem der Ansprüche 1 bis 11, **dadurch gekennzeichnet, dass** die Abdeckschicht (14) eine Interferenzschicht, vorzugsweise eine Kombination aus Oxidschichten unterschiedlicher Brechungsindizes und/oder eine Kombination aus Oxid- und Metallschichten oder eine Metallschicht, vorzugsweise aus Aluminium, Eisen, Kupfer, Chrom, Nickel oder aus Legierungen oder Kombinationen dieser Metalle ist.

13. Verfahren nach wenigstens einem der Ansprüche 1 bis 12, **dadurch gekennzeichnet, dass** die Abdeckschicht (14) aufgedampft wird.

14. Verfahren nach wenigstens einem der Ansprüche 1 bis 11, **dadurch gekennzeichnet, dass** die Abdeckschicht eine Farbschicht ist, die wenigstens einen Merkmalstoff mit besonderen physikalischen Eigenschaften enthält.

15. Verfahren nach wenigstens einem der Ansprüche 1 bis 14, **dadurch gekennzeichnet, dass** der Farbauftrag (13) durch Lösen mit einer Flüssigkeit, eventuell kombiniert mit mechanischer Einwirkung, erfolgt.

16. Verfahren nach Anspruch 15, **dadurch gekennzeichnet, dass** als Flüssigkeit Wasser oder ein organisches Lösungsmittel verwendet wird.

17. Verfahren nach wenigstens einem der Ansprüche 1 bis 16, **dadurch gekennzeichnet, dass** die Bebilderung der Druckform in Schritt b) in Form von Zeichen erfolgt, so dass nach dem Entfernen des Farbauftrags (13) in Schritt f) beschichtungsfreie Bereiche (15) in Form von Zeichen entstehen.

18. Verfahren nach wenigsten einem der Ansprüche 1 bis 16, **dadurch gekennzeichnet, dass** die Bebilderung der Druckform in Schritt b) so erfolgt, dass Bereiche der Druckform, die die Form von Zeichen aufweisen, nicht farbannehmend sind, so dass die Abdeckschicht (14) nach dem Entfernen des Farbauftrags (13) in Schritt f) nur mehr in den zeichenförmigen Bereichen vorhanden ist.

19. Verfahren nach Anspruch 1, **dadurch gekennzeichnet, dass** das Bedrucken der Trägerfolie mit einem Offsetdruck- oder elektrofotografischen Verfahren in Form des zu den Zeichen negativen Druckbildes und/oder der Zeichen unter Verwendung einer löslichen Druckfarbe erfolgt und das Entfernen der Druckfarbe und der in diesem Bereich angeordneten Abdeckschicht unter Verwendung eines organischen Lösungsmittels so erfolgt, dass nur die Abdeckschicht in Form von Zeichen auf der Trägerfolie verbleibt und/oder beschichtungsfreie Bereiche in Form von Zeichen in der Abdeckschicht entstehen.

20. Verfahren nach Anspruch 19, **dadurch gekennzeichnet, dass** die Schrifthöhe des Aufdrucks zwischen 0,1 und 0,2 mm beträgt.

21. Verfahren nach wenigstens einem der Ansprüche 19 oder 20, **dadurch gekennzeichnet, dass** als organisches Lösungsmittel Xylol, Benzin, Benzol, Terpentin, Tetrachlorkohlenstoff oder Methylanchlorid verwendet werden.

22. Verfahren zur Herstellung einer Sicherheitsfolie, die zumindest eine Abdeckschicht aufweist, die in Form von Zeichen vorliegt und/oder beschichtungsfreie Bereiche in Form von Zeichen aufweist, wobei das Verfahren die folgenden Schritte umfasst:
a) Bereitstellen einer Trägerfolie,
b) Bilden einer dünnen Abdeckschicht auf der Trägerfolie,
c) Bebilderung wenigstens einer in einer Druckmaschine befestigten Druckform, so dass Bereiche der Druckform farbannehmend sind, wobei die Bebilderung der Druckform wieder gelöscht und durch eine neue Bebilderung ersetzt werden kann,
d) Einfärben der Druckform mit einer für die Abdeckschicht ätzenden Druckfarbe,
e) Bedrucken der Trägerfolie, so dass die Abdeckschicht in den bedruckten Bereichen entfernt wird und beschichtungsfreie Bereiche entstehen.

23. Verfahren zur Herstellung einer Sicherheitsfolie, die zumindest eine Abdeckschicht aufweist, die in Form von Zeichen vorliegt und/oder beschichtungsfreie Bereiche in Form von Zeichen aufweist, wobei das Verfahren die folgenden Schritte umfasst:
a) Bereitstellen einer Trägerfolie,
b) Bilden einer dünnen Abdeckschicht auf der Trägerfolie,
c) Bebilderung wenigstens einer in einer Druckmaschine befestigten Druckform, so dass Bereiche der Druckform farbannehmend sind, wobei die Bebilderung der Druckform wieder gelöscht und durch eine neue Bebilderung ersetzt werden kann,
d) Einfärben der Druckform,
e) Bedrucken der Trägerfolie,
f) Wegätzen der Abdeckschicht in den nicht bedruckten Bereichen der Trägerfolie, so dass beschichtungsfreie Bereiche entstehen.

24. Verfahren zur Herstellung einer Sicherheitsfolie, die zumindest eine Abdeckschicht aufweist, die in Form von Zeichen vorliegt und/oder beschichtungsfreie Bereiche in Form von Zeichen aufweist, wobei das Verfahren die folgenden Schritte umfasst:
a) Bereitstellen einer Trägerfolie,
b) Bebilderung wenigstens einer in einer Druckmaschine befestigten Druckform, so dass Bereiche der Druckform farbannehmend sind, wobei die Bebilderung der Druckform wieder gelöscht und durch eine neue Bebilderung ersetzt werden kann,
c) Versehen der Druckform mit einer Klebstoffschicht,
d) Bedrucken der Trägerfolie mit der Klebstoffschicht,
e) In-Kontakt-Bringen der bedruckten Trägerfolie mit einer Farbschicht, die einen Merkmalstoff mit bestimmten physikalischen Eigenschaften aufweist,
f) Entfernen der Farbschicht in den nicht mit Klebstoff beschichteten Bereichen der Trägerfolie.

25. Verfahren nach Anspruch 24, **dadurch gekennzeichnet, dass** die Farbschicht auf einer Transferfolie angeordnet ist, die in Schritt f) abgezogen wird.

26. Verfahren nach wenigstens einem der Ansprüche 1 bis 25, **dadurch gekennzeichnet, dass** die fertige Sicherheitsfolie in Fäden oder Bänder geschnitten wird, die vorzugsweise eine Breite von 0,5 bis 20 mm aufweisen.

27. Verfahren nach wenigstens einem der Ansprüche 1 bis 25, **dadurch gekennzeichnet, dass** die Sicherheitsfolie mit weiteren Kunststoffschichten laminiert wird.

28. Verfahren nach wenigstens einem der Ansprüche 1 bis 27, **dadurch gekennzeichnet, dass** die fertige Sicherheitsfolie mit einer Klebstoffschicht versehen wird.

29. Verfahren nach wenigstens einem der Ansprüche 1 bis 25, **dadurch gekennzeichnet, dass** die Trägerfolie eine Kunststofffolie oder ein Papier ist.

30. Verfahren nach wenigstens einem der Ansprüche 24 bis 29, **dadurch gekennzeichnet, dass** als Merkmalstoff ein magnetischer, lumineszierender, thermochromer oder irisierender Stoff verwendet wird.

31. Verfahren nach wenigstens einem der Ansprüche 1 bis 25, **dadurch gekennzeichnet, dass** die Sicherheitsfolie in einzelne Etiketten oder Datenträger zerschnitten wird.

32. Sicherheitsfolie (30) für Wertgegenstände, wie Wertpapiere, bestehend aus einer Trägerfolie, die wenigstens zwei Sicherheitselemente (35, 36) aufweist, die jeweils mit einem zu sichernden Wertgegenstand verbunden werden können, wobei jedes Sicherheitselement zumindest aus einer Abdeckschicht (31) besteht, die in Form von Zeichen vorliegt und/oder beschichtungsfreie Bereiche in Form von Zeichen (32, 33) aufweist, **dadurch gekennzeichnet, dass** die Zeichen (32, 33) der beiden Sicherheitselemente (35, 36) unterschiedlich sind.

## Claims

1. A method for producing a security foil having at least a cover layer (14) which is present in the form of characters and/or coating-free areas in the form of characters, whereby the method comprises the following steps:
a) providing a carrier foil (10),
b) imaging at least one printing form fastened in a printing machine so that areas of the form are ink-accepting, whereby the imaging of the form can be erased again and replaced by a new imaging,
c) inking the form,
d) printing the carrier foil so that an inking (13) arises,
e) forming a thin cover layer (14) on the printed carrier foil (10),
f) removing the inking (13) and the cover layer thereabove so that the coating-free areas (15) arise.

2. A method according to claim 1, **characterized in that** the imaging of the form is effected by means of digital data in computer-controlled fashion.

3. A method according to claim 1 or 2, **characterized in that** the form used is an intaglio form (20) with all-over screen engraving (21) which is imaged according to the following steps:
- the screen is filled with a readily curable lacquer (22),
- the lacquer (22) is removed from the screen dots (24) which are to be ink-accepting by means of spark erosion or luminous radiation.

4. A method according to claim 1 or 2, **characterized in that** the form used is an offset form which is exposed by spark erosion or luminous radiation in the areas which are to be ink-accepting.

5. A method according to claim 1 or 2, **characterized in that** the form used is a screen printing form which is imaged in the printing machine according to the following steps:
- the screen openings are closed all over with a readily curable lacquer,
- the screen openings which are to be ink-permeable are reopened by means of a computer-controlled tool.

6. A method according to claim 5, **characterized in that** the screen is closed with a UV-curable lacquer.

7. A method according to claim 5 or 6, **characterized in that** the screen openings are opened by the action of light, heat, air, gas, liquid jet or by spark erosion.

8. A method according to claim 1 or 2, **characterized in that** the imaging of the form is effected electrophotographically.

9. A method according to at least one of claims 1 to 8, **characterized in that** the form is designed as a cylinder.

10. A method according to at least one of claims 1 to 9, **characterized in that** the carrier foil (10) is provided in the form of an endless band and the method is performed continuously.

11. A method according to at least one of claims 1 to 10, **characterized in that** the carrier foil (10) is provided after step a) with a lacquer layer (11) in which a relief structure (12) is embossed, preferably in the form of a diffraction structure.

12. A method according to at least one of claims 1 to 11, **characterized in that** the cover layer (14) is an interference layer, preferably a combination of oxide layers with different refractive indexes and/or a combination of oxide and metal layers or a metal layer, preferably of aluminum, iron, copper, chromium, nickel or of alloys or combinations of said metals.

13. A method according to at least one of claims 1 to 12, **characterized in that** the cover layer (14) is vapor-deposited.

14. A method according to at least one of claims 1 to 11, **characterized in that** the cover layer is a color layer containing at least one feature substance with special physical properties.

15. A method according to at least one of claims 1 to 14, **characterized in that** the inking (13) is done by dissolution with a liquid, possibly combined with mechanical action.

16. A method according to claim 15, **characterized in that** the liquid used is water or an organic solvent.

17. A method according to at least one of claims 1 to 16, **characterized in that** imaging of the form in step b) is done in the form of characters so that coating-free areas (15) in the form of characters arise after removal of the inking (13) in step f).

18. A method according to at least one of claims 1 to 16, **characterized in that** imaging of the form in step b) is done such that areas of the form having the form of characters are not ink-accepting so that the cover layer (14) is only present in the character-shaped areas after removal of the inking (13) in step f).

19. A method according to claim 1, **characterized in that** the printing of the carrier foil is done with an offset or electrophotographic method in the form of the negative image of the characters and/or of the characters using a soluble ink, and the removal of the ink and the cover layer disposed in this area is done using an organic solvent such that only the cover layer in the form of characters remains on the carrier foil and/or coating-free areas in the form of characters arise in the cover layer.

20. A method according to claim 19, **characterized in that** the type height of the print is between 0.1 and 0.2 mm.

21. A method according to at least one of claims 19 or 20, **characterized in that** the organic solvent used is xylene, benzin, benzene, turpentine, perchloromethane or dichloromethane.

22. A method for producing a security foil having at least a cover layer which is present in the form of characters and/or has coating-free areas in the form of characters, whereby the method comprises the following steps:
a) providing a carrier foil,
b) forming a thin cover layer on the carrier foil,
c) imaging at least one printing form fastened in a printing machine so that areas of the form are ink-accepting, whereby the imaging of the form can be erased again and replaced by a new imaging,
d) inking the form with an ink etching the cover layer,
e) printing the carrier foil so that the cover layer is removed in the printed areas and coating-free areas arise.

23. A method for producing a security foil having at least a cover layer which is present in the form of characters and/or has coating-free areas in the form of characters, whereby the method comprises the following steps:
a) providing a carrier foil,
b) forming a thin cover layer on the carrier foil,
c) imaging at least one printing form fastened in a printing machine so that areas of the form are ink-accepting, whereby the imaging of the form can be erased again and replaced by a new imaging,
d) inking the form,
e) printing the carrier foil,
f) etching away the cover layer in the unprinted areas of the carrier foil so that coating-free areas arise.

24. A method for producing a security foil having at least a cover layer which is present in the form of characters and/or has coating-free areas in the form of characters, whereby the method comprises the following steps:
a) providing a carrier foil,
b) imaging at least one printing form fastened in a printing machine so that areas of the form are ink-accepting, whereby the imaging of the form can be erased again and replaced by a new imaging,
c) providing the form with an adhesive layer,
d) printing the carrier foil with the adhesive layer,
e) contacting the printed carrier foil with a color layer having a feature substance with certain physical properties,
f) removing the color layer in the areas of the carrier foil not coated with adhesive.

25. A method according to claim 24, **characterized in that** the color layer is disposed on a transfer foil which is removed in step f).

26. A method according to at least one of claims 1 to 25, **characterized in that** the finished security foil is cut into threads or bands which preferably have a width of 0.5 to 20 mm.

27. A method according to at least one of claims 1 to 25, **characterized in that** the security foil is laminated with further plastic layers.

28. A method according to at least one of claims 1 to 27, **characterized in that** the finished security foil is provided with an adhesive layer.

29. A method according to at least one of claims 1 to 25, **characterized in that** the carrier foil is a plastic foil or paper.

30. A method according to at least one of claims 24 to 29, **characterized in that** the feature substance used is a magnetic, luminescent, thermochromic or iridescent substance.

31. A method according to at least one of claims 1 to 25, **characterized in that** the security foil is cut up into individual labels or data carriers.

32. A security foil (30) for objects of value such as papers of value consisting of a carrier foil having at least two security elements (35, 36) which can each be connected with an object of value to be protected, each security element consisting at least of a cover layer (31) which is present in the form of characters and/or has coating-free areas in the form of characters (32, 33), **characterized in that** the characters (32, 33) of the two security elements (35, 36) are different.

## Revendications

1. Procédé de fabrication d'un film de sécurité qui présente au moins une couche de recouvrement (14) qui est disponible sous forme de symboles ou signes et/ou présente des zones exemptes de revêtement en forme de symboles, le procédé comprenant les étapes suivantes :
a) mise à disposition d'un film support (10),
b) illustration d'au moins une forme d'impression fixée dans une machine à imprimer de sorte que des zones de la forme d'impression soient réceptives pour de l'encre, l'illustration de la forme d'impression pouvant être réeffacée et remplacée par une nouvelle illustration,
c) encrage de la forme d'impression,
d) impression du film support de sorte qu'une application d'encre (13) soit obtenue,
e) formation d'une mince couche de recouvrement (14) sur le film support imprimé (10),
f) élimination de l'application d'encre (13) et de la couche de recouvrement sus-jacente de sorte que les zones exemptes de revêtement (15) soient obtenues.

2. Procédé selon la revendication 1, **caractérisé en ce que** l'illustration de la forme d'impression s'effectue de manière commandée par ordinateur au moyen de données numériques.

3. Procédé selon la revendication 1 ou 2, **caractérisé en ce qu'**une forme d'impression en héliogravure ou taille douce (20) avec une gravure tramée sur toute la surface (21) est utilisée pour la forme d'impression, et est illustrée selon les étapes suivantes :
- la trame est remplie avec une laque (22) aisément durcissable,
- la laque (22) est de nouveau éliminée, par étincelage ou radiation lumineuse, des points de trame (24) devant être réceptifs pour de l'encre.

4. Procédé selon la revendication 1 ou 2, **caractérisé en ce qu'**une forme d'impression offset est utilisée pour la forme d'impression, et est exposée par étincelage ou radiation lumineuse dans les zones qui doivent être réceptives pour de l'encre.

5. Procédé selon la revendication 1 ou 2, **caractérisé en ce qu'**une forme d'impression pour sérigraphie est utilisée pour la forme d'impression, ladite forme d'impression pour sérigraphie étant illustrée dans la machine à imprimer selon les étapes suivantes :
- les mailles de sérigraphie sont obturées sur toute la surface avec une laque aisément durcissable,
- les mailles qui doivent être réceptives pour de l'encre sont rouvertes au moyen d'un outil commandé par ordinateur.

6. Procédé selon la revendication 5, **caractérisé en ce que** l'écran est obturé avec une laque durcissable aux UV.

7. Procédé selon la revendication 5 ou 6, **caractérisé en ce que** les mailles sont ouvertes par action de la lumière, de la chaleur, de l'air, de gaz, de jet liquide ou par étincelage.

8. Procédé selon la revendication 1 ou 2, **caractérisé en ce que** l'illustration de la forme d'impression s'effectue de manière électrophotographique.

9. Procédé selon au moins l'une des revendications 1 à 8, **caractérisé en ce que** la forme d'impression est réalisée sous forme de cylindre.

10. Procédé selon au moins l'une des revendications 1 à 9, **caractérisé en ce que** le film support (10) est mis à disposition sous la forme d'une bande sans fin et **en ce que** le procédé est réalisé en continu.

11. Procédé selon au moins l'une des revendications 1 à 10, **caractérisé en ce que** le film support (10) est pourvu d'une couche de laque (11) après l'étape a), une structure en relief (12), de préférence sous la forme d'une structure de diffraction, étant gravée dans ladite couche de laque.

12. Procédé selon au moins l'une des revendications 1 à 11, **caractérisé en ce que** la couche de recouvrement (14) est une couche d'interférence, de préférence une combinaison de couches d'oxyde avec différents indices de réfraction et/ou une combinaison de couches d'oxyde et de couches de métal ou une couche de métal, de préférence en aluminium, en fer, en cuivre, en chrome, en nickel ou en alliages ou combinaisons de ces métaux.

13. Procédé selon au moins l'une des revendications 1 à 12, **caractérisé en ce que** la couche de recouvrement (14) est métallisée par évaporation sous vide.

14. Procédé selon au moins l'une des revendications 1 à 11, **caractérisé en ce que** la couche de recouvrement est une couche d'encre qui contient au moins une substance caractéristique avec des propriétés physiques particulières.

15. Procédé selon au moins l'une des revendications 1 à 14, **caractérisé en ce que** l'application d'encre (13) s'effectue par dissolution avec un liquide, éventuellement combinée avec une intervention mécanique.

16. Procédé selon la revendication 15, **caractérisé en ce que** de l'eau ou un solvant organique est utilisé en tant que liquide.

17. Procédé selon au moins l'une des revendications 1 à 16, **caractérisé en ce que** l'illustration de la forme d'impression s'effectue sous forme de symboles à l'étape b) de sorte que des zones exemptes de revêtement (15) en forme de symboles soient obtenues à l'étape f) après l'élimination de l'application d'encre (13).

18. Procédé selon au moins l'une des revendications 1 à 16, **caractérisé en ce que** l'illustration de la forme d'impression s'effectue à l'étape b) de telle manière que des zones de la forme d'impression qui présentent la forme de symboles ne soient pas réceptives pour de l'encre de sorte que la couche de recouvrement (14) ne soit plus disponible que dans les zones en forme de symboles après l'élimination de l'application d'encre (13) à l'étape f).

19. Procédé selon la revendication 1, **caractérisé en ce que** l'impression du film support avec un procédé d'impression offset ou électrophotographique sous la forme de l'image imprimée en négatif par rapport aux symboles et/ou sous la forme des symboles s'effectue en utilisant une encre d'impression soluble et **en ce que** l'élimination de l'encre d'impression et de la couche de recouvrement disposée dans cette zone s'effectue en utilisant un solvant organique de telle manière que seule la couche de recouvrement en forme de symboles demeure sur le film support et/ou que des zones exemptes de revêtement en forme de symboles soient obtenues dans la couche de recouvrement.

20. Procédé selon la revendication 19, **caractérisé en ce que** la hauteur d'écriture du texte imprimé est comprise entre 0,1 et 0,2 mm.

21. Procédé selon au moins l'une des revendications 19 ou 20, **caractérisé en ce que** du xylène, de l'essence, du benzène, de la térébenthine, du tétrachlorure de carbone ou du chlorure de méthylène sont utilisés en tant que solvant organique.

22. Procédé de fabrication d'un film de sécurité qui présente au moins une couche de recouvrement qui est disponible sous forme de symboles ou signes et/ou présente des zones exemptes de revêtement en forme de symboles, le procédé comprenant les étapes suivantes :
a) mise à disposition d'un film support,
b) formation d'une mince couche de recouvrement sur le film support,
c) illustration d'au moins une forme d'impression fixée dans une machine à imprimer de sorte que des zones de la forme d'impression soient réceptives pour de l'encre, l'illustration de la forme d'impression pouvant être réeffacée et remplacée par une nouvelle illustration,
d) encrage de la forme d'impression avec une encre d'impression corrosive pour la couche de recouvrement,
e) impression du film support de sorte que la couche de recouvrement soit éliminée dans les zones imprimées et que des zones exemptes de revêtement soient obtenues.

23. Procédé de fabrication d'un film de sécurité qui présente au moins une couche de recouvrement qui est disponible sous forme de symboles ou signes et/ou présente des zones exemptes de revêtement en forme de symboles, le procédé comprenant les étapes suivantes :
a) mise à disposition d'un film support,
b) formation d'une mince couche de recouvrement sur le film support,
c) illustration d'au moins une forme d'impression fixée dans une machine à imprimer de sorte que des zones de la forme d'impression soient réceptives pour de l'encre, l'illustration de la forme d'impression pouvant être réeffacée et remplacée par une nouvelle illustration,
d) encrage de la forme d'impression,
e) impression du film support,
f) décapage chimique de la couche de recouvrement dans les zones non impnmées du film support, de sorte que des zones exemptes de revêtement soient obtenues.

24. Procédé de fabrication d'un film de sécurité qui présente au moins une couche de recouvrement qui est disponible sous forme de symboles ou signes et/ou présente des zones exemptes de revêtement en forme de symboles, le procédé comprenant les étapes suivantes :
a) mise à disposition d'un film support,
b) illustration d'au moins une forme d'impression fixée dans une machine à imprimer de sorte que des zones de la forme d'impression soient réceptives pour de l'encre, l'illustration de la forme d'impression pouvant être réeffacée et remplacée par une nouvelle illustration,
c) application d'une couche d'adhésif sur la forme d'impression,
d) impression du film support avec la couche d'adhésif,
e) mise en contact du film support imprimé avec une couche d'encre qui présente une substance caractéristique avec des propriétés physiques déterminées,
f) élimination de la couche d'encre dans les zones du film support non enduites d'adhésif.

25. Procédé selon la revendication 24, **caractérisé en ce que** la couche d'encre est disposée sur un film de transfert qui est retiré à l'étape f).

26. Procédé selon au moins l'une des revendications 1 à 25, **caractérisé en ce que** le film de sécurité fini est coupé en fils ou en bandes qui présentent de préférence une largeur comprise entre 0,5 et 20 mm.

27. Procédé selon au moins l'une des revendications 1 à 25, **caractérisé en ce que** le film de sécurité est stratifié avec d'autres couches en matière plastique.

28. Procédé selon au moins l'une des revendications 1 à 27, **caractérisé en ce que** le film de sécurité fini est muni d'une couche de colle ou d'adhésif.

29. Procédé selon au moins l'une des revendications 1 à 25, **caractérisé en ce que** le film support est un film en matière plastique ou un papier.

30. Procédé selon au moins l'une des revendications 24 à 29, **caractérisé en ce qu'**une substance magnétique, luminescente, thermochrome ou iridescente est utilisée en tant que substance caractéristique.

31. Procédé selon au moins l'une des revendications 1 à 25, **caractérisé en ce que** le film de sécurité est découpé en étiquettes ou supports de données individuels.

32. Film de sécurité (30) pour des objets de valeur, tels que des papiers-valeurs, se composant d'un film support qui comporte au moins deux éléments de sécurité (35, 36) qui peuvent être assemblés chacun avec un objet de valeur à sécuriser, chaque élément de sécurité se composant au moins d'une couche de recouvrement (31) qui est disponible sous forme de symboles ou signes et/ou présente des zones exemptes de revêtement en forme de symboles (32, 33), **caractérisé en ce que** les symboles (32, 33) des deux éléments de sécurité (35, 36) sont différents.
